# EUROPEAN PATENT SPECIFICATION

(11) **EP 1 839 905 B1**
(45) Date of publication and mention of the grant of the patent: **27.05.2009**
(21) Application number: 07101670.3
(22) Date of filing: 02.02.2007
(51) Int. Cl.: B60B 29/00

(54) **An autonomous system equipped for tyre replacement**
Autonomes System zum Reifenwechseln
Système autonome équipé pour le remplacement d'un pneumatique

(30) Priority: 28.03.2006 IT RE20060042
(43) Date of publication of application: 03.10.2007
(73) Proprietor: Mazzoli, William, 42042 Fabbrico (RE) (IT)
(72) Inventor: Mazzoli, William, 42042 Fabbrico (RE) (IT)
(74) Representative: Corradini, Corrado

(56) References cited:
- FR-A1- 2 764 240
- US-A1- 2005 074 316
- US-B1- 6 237 206

## Description

The invention relates to an autonomous system equipped for tyre replacement.

More in particular, the invention relates to a mobile autonomous system equipped for changing tyres, which can be housed on self-propelled vehicles and can be brought autonomously to within an immediate vicinity of a vehicle having a tyre requiring to be changed.

Mobile service vehicles are known in the prior art, such as those which generally travel up and down motorways, highways and metropolitan ring-roads; they are aimed at aiding lorry-drivers and motorists having experienced a breakdown due to a tyre puncture or blow-out.

These mobile service vehicles are predisposed, following special preparation of usual commercial truck-type vehicles, known simply as trucks, in order to carry on-board at least one tyre-removing plant and, obviously, the corresponding accessories or additional devices.

To change a tyre, it is necessary to transport the wheel bearing the tyre to be replaced onto the truck, where the tyre-changer is housed, after the wheel has been dismounted from the vehicle. These operations, especially if performed on large wheels such as those mounted on lorries, involve considerable difficulties due to the manoeuvring necessary to bring the wheel onto the truck.

To obviate the above-described drawback, the prior art describes, in application no. RE2005A000051, by the same applicant, use of a vertically-mobile frame, which is hinged to a portal rising above the posterior part of a tyre-changer housed in a truck. The frame includes a rack which can contain a series of tyres of various sizes, and enables the wheel to be repaired to be raised onto the truck, where the tyre-changing operations are carried out.

This solution, though exhibiting an undoubted advantage with respect to the previous prior art, is not truly adaptable to cases where the space needed for the prolonged parking of the truck is not available in the immediate vicinity of the stricken vehicle, or where there is intense traffic moving at high speed.

In this case it is necessary for the truck housing the tyre-changer to stop at a distance from the point where the vehicle needing the wheel-change is parked. What is more, this drawback progressively increases in gravity as the distance increases and depending on the size of the wheel to be shifted to the truck, such as for example in the case of a lorry.

A further drawback is due to the fact that large wheels are very difficult to move around inside the truck.

US 2005/074316 discloses an handling device for articles such as tyres having a base with wheels to be moved and a frame provided with means for handling and moving articles. The base has moreover a first couple of articulated arms that extend from a central portion of the base. The frame has a central portion from which a second couple of articulated arms are extended, the second arms having at their extremities, have gripping means for the article to be manipulated, said means being movable by means of hydraulic cylinders. A central portion of the frame is movable vertically and carries with itself the second arms.

The use of such device is not for tyre replacement, but only for handling bulky articles.

FR 2 764 240 shows an handling device for articles such as wheels, tyres and similar. The device is mounted on a movable frame having pivotable wheels. The device has a vertical axis on which an articulation assembly is mounted and is vertically movable and drives a bar that in turn holds a tool able to grip different kinds of wheels.

The device can be motorized and is able to orient the wheel along a first axis in order to put it horizontally or vertically and according to a second axis that coincides with the axis of the wheel.

However such device is not suitable for being housed in a loading chamber of a vehicle.

US 6 237 206 discloses a wheel pulling and transporting device having a frame movable with the aid of wheels. The frame has a threaded shaft that presents retaining means for engagement with a wheel's hub. The device has moreover a plurality of fasteners that do not transmit torque, specifically disclosed as chains provided with hooks for hooking to rings on the frame device. The threaded shaft can be rotated to distance the frame of the device from the wheel's hub thereby exercising a force on the wheel by means of the chains.

The prior art does not provide for a positioning system for a screwing/unscrewing device on the same frame on which the tyre-removing device is mounted.

For this reason there is a strongly-felt need to have available an autonomous system equipped for replacing tyres which can operate in the immediate vicinity of the vehicle needing the replacement, and which at the same time occupies a small space in order not to constitute an obstruction in a busy road; what is more, the system must also provide all the advantages of a traditional mobile service, and the solution should be simple and rational.

The aim of the present invention is to make available an autonomous system equipped for replacing tyres, having structural and functional characteristics such as to satisfy the above-described requirements and such as at the same time to obviate the cited drawbacks with reference to the prior art.

The above aim is attained by an autonomous system equipped for the replacement of tyres in agreement with claim 1.

The dependent claims delineate preferred and particularly advantageous embodiments of the autonomous system equipped for the replacement of tyres of the invention.

Further characteristics and advantages of the invention will become evident from a reading of the following description, provided by way of non-limiting example, with the aid of the accompanying figures of the drawings, in which:
Figure 1 is a schematic view from above of the system of the present invention;

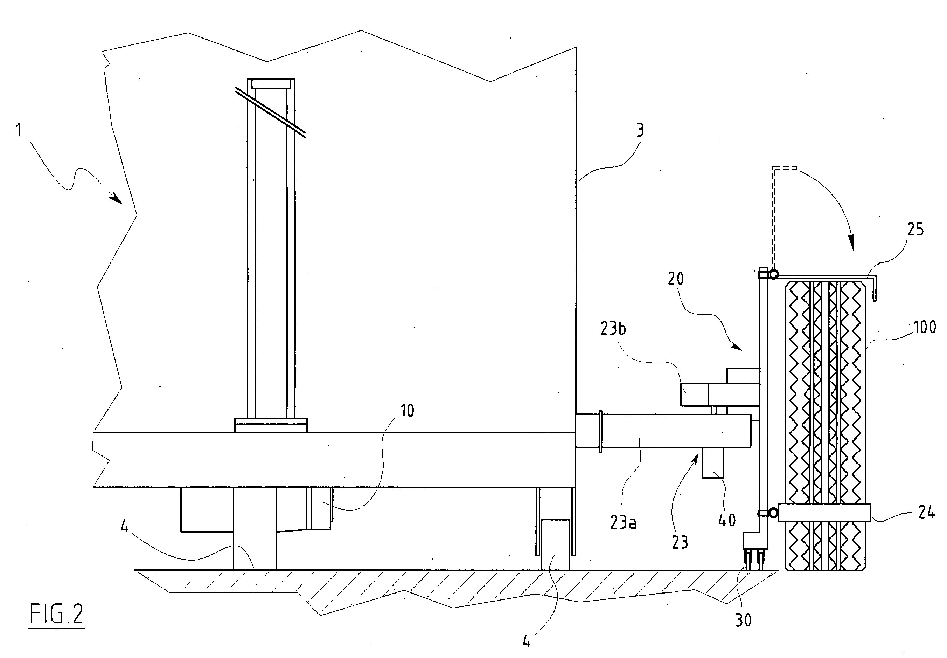

Figure 2 is a view taken from arrow A of figure 1;
Figure 3 is a front view of a detail of figures 1 and 2;
Figure 4 is an electrical diagram of the functioning of the system of the invention.

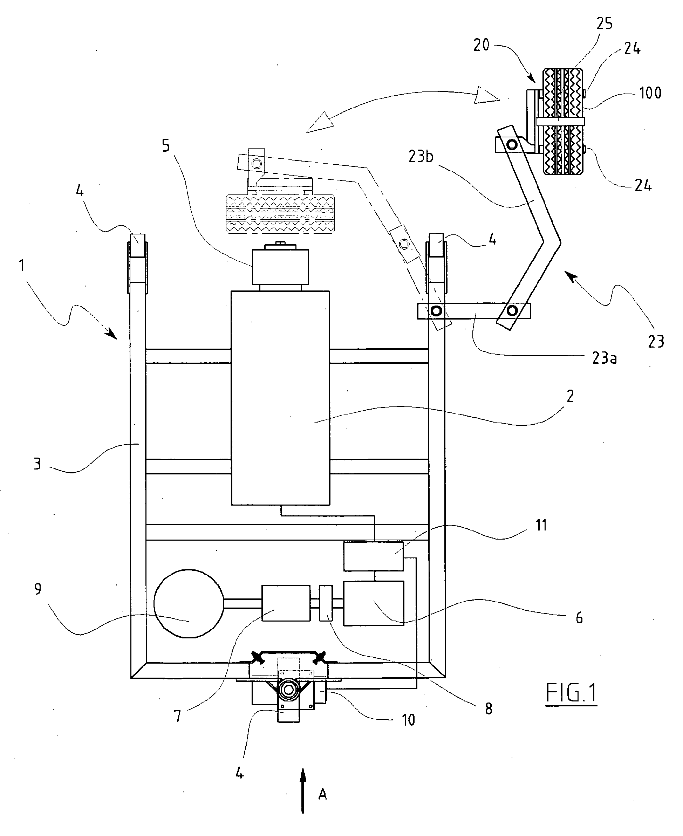

With reference to figure 1, 1 denotes in its entirety an autonomous system equipped for the replacement of tyres of the present invention.

The system 1 comprises a tyre-removing device 2, of known type, entirely housed on a mobile frame 3, or trolley, provided with wheels 4, three wheels in the illustrated embodiment, of which one centrally-located back drive wheel, and two side-mounted front wheels.

The trolley 3 is destined to be entirely housed internally of a chamber of a vehicle, not illustrated, on a floor of which the wheels 4 are directly rested.

In particular, the tyre-removing device 2 exhibits a horizontal-axis self-centring group 5 located in proximity of the front edge of the trolley 3.

In the present invention, the tyre-removing device 2 is powered by a motor housed on the trolley 3.

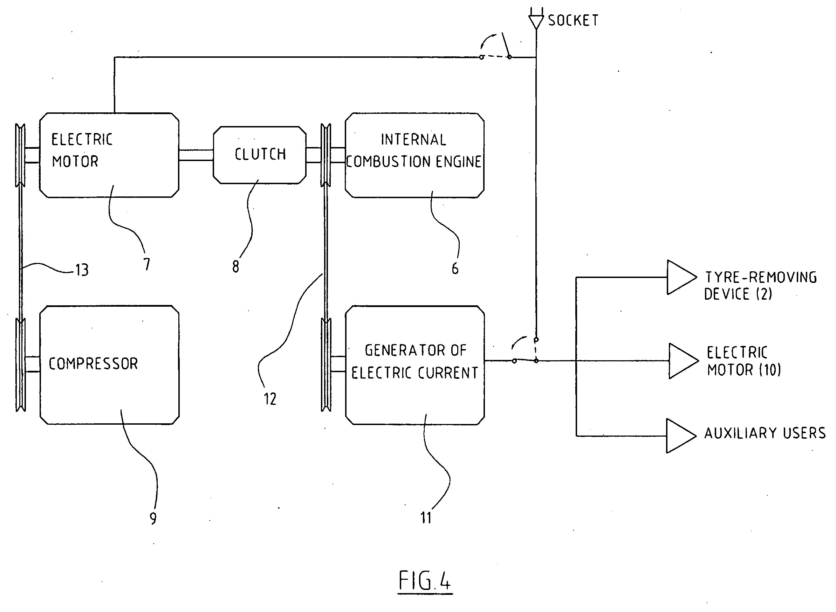

The motor comprises an internal-combustion engine 6 connected by a chain 12 to a generator 11 of current, which generator supplies the electrical apparatus of the tyre-removing device 2 and any other necessary auxiliary users (figure 4). In particular, the generator 11 also supplies a small electric motor 10 which powers the back wheel 4, preferably via an electrical accumulator.

In addition, the internal combustion engine 6, by means of a clutch, drives the shaft of an electric motor 7 connected by a chain 13 to a compressor 9 which provides the compressed air needed for the tyre-removing device 2 to function, and any other required auxiliary accessory users.

Alternatively, the tyre-removing device 2 and the any other auxiliary users, as well as the electric motor 10, can be supplied directly by the mains electrical supply, should this be available at the place of operations. In this case, the electric motor 7 too can be supplied directly from the mains supply, by connecting up the clutch 8 connecting the internal combustion engine 6.

In the preferred embodiment of the present invention, the system 1 is further provided with a tyre-removing frame 20 fixed articulatedly to the trolley 3 by an articulated system 23.

In the illustrated embodiment, the articulated system 23 is a pair of hinged arms 23a, 23b controlled by a manoeuvring actuator.

To enable the removed wheel 100 to be raised to bring it to the self-centring group 5 of the tyre-removing device 2, as well as to lower it thereafter, special actuator means are provided, such as for example a hydraulic jack 40.

The articulated system 23 enables the frame 20 to be neared to the wheel 100 in order that the wheel 100 can be raised once removed from the vehicle.

However, any other configuration known in the sector can be used.

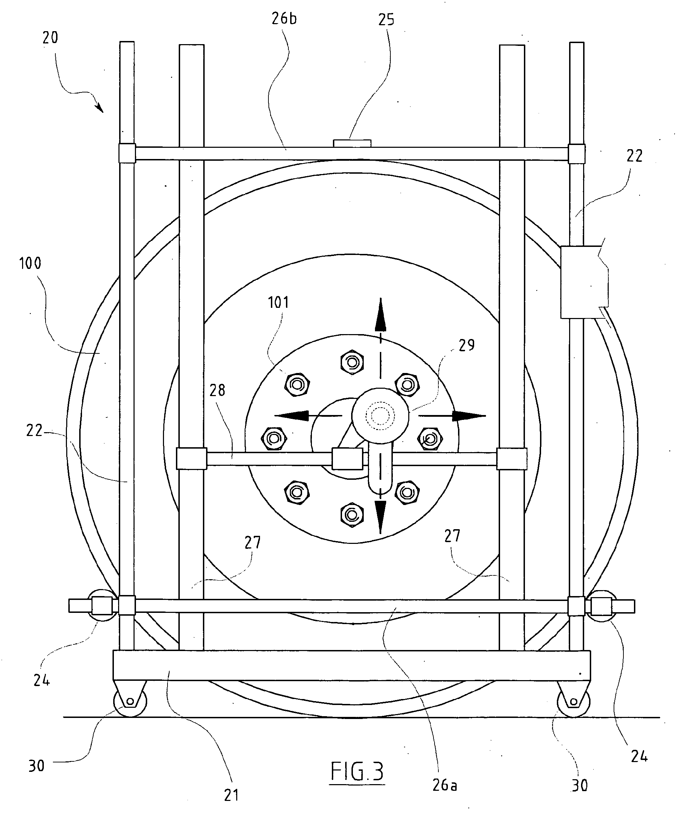

In the illustrated example, and as can be seen in figure 3, the frame 20 is provided with a base 21 from which a pair of fixed lateral uprights 22 rise, located opposite one another, one of which being hinged, by the articulated system 23, to a free end of the trolley 3 in proximity of the self-centring group 5 of the tyre-removing device 2.

Two vertically-slidable cross-bars are mounted to the pair of uprights 22, respectively a lower crossbar 26a and a higher crossbar 26b. Two horizontally-slidable rollers 24 are mounted at opposite ends of the lower crossbar 26a, which rollers 24 can be arranged at sides of the wheel 100 to be removed and having axes which are parallel to an axis of the wheel 100 in order to support the wheel 100. A hook 25 is hinged to the centre of the supper crossbar 26b, which hook 25 grips the upper portion of the wheel 100, in order to prevent the wheel 100 from tipping over once removed from the vehicle.

Should the articulated system 23 range of action not be sufficient to bring the frame 20 close to the wheel 100 to be repaired, autonomous use can be made of the frame 20 with respect to the trolley 3. For this purpose the base 21 can be provided with wheels 30 which facilitate transport of the frame 20 on the ground.

To facilitate and accelerate the wheel 100 replacement, the frame 20 is further provided with a positioning structure. The positioning structure comprises a pair of vertical guides 27 arranged parallel to and internally of the uprights 22 of the frame 20 and fixed to the base 21 of the frame 20.

A transversal bar 28 is slidably mounted on the guides 27, on which a screwing/unscrewing device 29 is free to slide horizontally.

This configuration enables operating with greater precision. The operator can correctly position the screwing/unscrewing device 29 before the bolt 101 simply by sliding the screwing/unscrewing device 29 on the bar 28 and/or sliding the bar 28 on the guides 27.

In particular, the screwing/unscrewing device 29 is pushed against the bolt 101 on which the operation is to be done by means of a means for pushing, for example a spring, not visible in the figures of the drawings.

This configuration effectively prevents transmission of torque from the screwing/unscrewing device 29 to the user, which torque is typically present during the first unscrewing stage of each bolt 101, in particular when dealing with lorry wheel bolts,

Further, the screwing/unscrewing device 29 is provided with a sensor for enabling screwing-up of the bolts 101 during the wheel 100 remounting stage after tyre repair, with a predetermined tightening force.

In a further application, the tyre-removing device can be removed from the trolley 3 and located on a special platform, fixed to the ground, should there be particular applicational needs demanding this.

As can be appreciated from the foregoing description, the autonomous system equipped for replacement of tyres of the present invention satisfies the needs and obviates the drawbacks mentioned in the introductory part of the present description, with reference to the prior art.

The system of the present invention enables operating in the immediate vicinity of the wheel to be repaired thanks to a trolley which is totally autonomous of the truck transporting it.

Further, the system is easily transportable thanks to the wheels bearing it, one of which is powered.

Additionally, the use of the frame for removing the wheel means that the removal operation is done automatically and with extreme simplicity.

Obviously, an expert in the sector, for contingent and specific reasons, might make numerous modifications and variation to the herein-described autonomous system equipped for replacing tyres, all falling within the ambit of protection sought by the invention, as defined in the following claims.

## Claims

1. An autonomous system (1) equipped for tyre (100) replacement, housable in a loading chamber of a vehicle, which system (1) comprises a tyre-removing device (2) housed entirely on a mobile frame (3) provided with wheels (4), the tyre-removing device (2) being activated by a motor (6) housed on the frame (3), further comprising a frame (20) for removing the wheel, **characterised in that** said frame being provided with a positioning system for a screwing/unscrewing device (29).

2. The system of claim 1, wherein the motor (6) comprises an internal combustion engine (6).

3. The system of claim 2, wherein the internal combustion engine (6) is connected to a generator (11) which generator supplies the electrical apparatus of the tyre-removing device (2) and the generator (11) is housed on the frame (3).

4. The system (1) of claim 3, wherein the generator (11) supplies, via an accumulator, an electric motor (10) which powers at least one of the wheels (4) provided on the frame (3).

5. The system of claim 2, wherein by means of a disconnectable clutch (8) the internal combustion engine (6) turns a shaft of an electric motor (7) connected to a compressor (9), the electric motor (7) and the compressor (9) being housed on the mobile frame (3).

6. The system (1) of claim 1, wherein said frame (20) for removing a wheel is articulatedly fixed to the mobile frame (3).

7. The system (1) of claim 6, wherein the frame (20) is provided with wheels (30) and means (24, 25) for holding the wheel (100).

8. The system (1) of claim 7, wherein the means for holding the wheel comprise a pair of rollers (24) which are positioned at sides of the wheel (100) to be removed, with axes of the rollers (24) being parallel to an axis of the wheel (100), and a hook (25) for gripping at least a portion of the wheel (100).

9. The system (1) of claim 6, wherein the frame (20) is provided with a positioning system equipped with a screwing/unscrewing device (29), the positioning system having an aim of locating the screwing/unscrewing device (29) in a prefixed position.

## Patentansprüche

1. Ein autonomes System (1), ausgestattet zur Reifenersetzung (100), unterbringbar in einer Ladekammer eines Fahrzeugs, wobei das System (1) eine Vorrichtung zur Reifenentfernung (2) enthält, das vollständig auf einem beweglichen Rahmen (3) sitzt, ausgestattet mit Rädern (4), die Vorrichtung zur Reifenentfernung (2) wird von einem Motor (6) betätigt, der auf dem Rahmen (3) sitzt, **gekennzeichnet durch** die Tatsache, dass es außerdem einen Rahmen (20) für die Entfernung des Rads aufweist, wobei der besagte Rahmen mit einem Positionierungsystem für eine Anschraub- und Abschraubvorrichtung (29) ausgestattet ist.

2. Das System von Anspruch 1, wobei der Motor (6) einen internen Verbrennungsmotor (6) umfasst.

3. Das System von Anspruch 2, wobei der interne Verbrennungsmotor (6) an einen Generator (11) angeschlossen ist, wobei der Generator die Elektrik der Vorrichtung zur Reifenentfernung (2) speist und der Generator (11) auf dem Rahmen (3) sitzt.

4. Das System (1) von Anspruch 3, wobei der Generator (11) über einen Akkumulator einen Elektromotor (10) speist, der zumindest eins der Räder (4) des Rahmens (3) antreibt.

5. Das System von Anspruch 2, wobei der interne Verbrennungsmotor (6) über eine abnehmbare Kupplung (8) eine Welle eines Elektromotors (7) antreibt, der an einen Verdichter (9) angeschlossen ist, wobei der Elektromotor (7) und der Verdichter (9) auf dem beweglichen Rahmen (3) sitzen.

6. Das System (1) von Anspruch 1, wobei der besagte Rahmen (20) für die Entfernung eines Rads mit einem Gelenk am beweglichen Rahmen (3) befestigt ist.

7. Das System (1) von Anspruch 6, wobei der Rahmen (20) Räder (30) und Vorrichtungen (24, 25) zum Halten des Rads (100) aufweist.

8. Das System (1) von Anspruch 7, wobei die Vorrichtungen zum Halten des Rads ein Paar Rollen (24) umfassen, die seitlich des zu entfernenden Rads (100) positioniert werden, wobei sich die Achsen der Rollen (24) parallel zu einer Achse des Rads (100) befinden, sowie einen Haken (25) zum Greifen zumindest eines Teils des Rads (100).

9. Das System (1) von Anspruch 6, wobei der Rahmen (20) ein Positionierungssystem aufweist, das mit einer Anschraub- und Abschraubvorrichtung (29) ausgestattet ist, wobei das Positionierungssystem dazu dient, die Anschraub- und Abschraubvorrichtung (29) in einer bestimmten Position zu halten.

## Revendications

1. Un système autonome (1) équipé pour le remplacement de pneu (100), pouvant être logé dans une chambre de chargement d'un véhicule, dont le système (1) comprend un dispositif démonte-pneu (2) entièrement logé dans un châssis mobile (3) doté de roues (4), le dispositif démonte-pneu (2) étant activé par un moteur (6) logé sur le châssis (3) et comprenant également un châssis (20) pour le retrait de la roue, **caractérisé par le fait que** ledit châssis est doté d'un système de positionnement pour un dispositif de vissage/dévissage (29).

2. Le système de la revendication 1, où le moteur (6) comprend un moteur à combustion interne (6).

3. Le système de la revendication 2, où le moteur à combustion interne (6) est relié à un générateur (11) qui fournit l'appareillage électrique du dispositif démonte-pneu (2), ce générateur (11) étant logé sur le châssis (3).

4. Le système (1) de la revendication 3, où le générateur (11) fournit, par l'intermédiaire d'un accumulateur, un moteur électrique (10) qui alimente au moins une des roues (4) prévues sur le châssis (3).

5. Le système de la revendication 2, où le moteur à combustion interne (6) utilise un embrayage débrayable (8) pour faire tourner un arbre d'un moteur électrique (7) relié à un compresseur (9), le moteur électrique (7) et le compresseur (9) étant logé sur le châssis mobile (3).

6. Le système (1) de la revendication 1, où ledit châssis (20) pour le retrait d'une roue est fixé de manière articulée au châssis mobile (3).

7. Le système (1) de la revendication 6, où ledit châssis (20) est doté de roues (30) et de dispositifs (24, 25) pour tenir la roue (100).

8. Le système (1) de la revendication 7, où les dispositifs pour tenir la roue comprennent une paire de rouleaux (24) qui sont positionnés sur les côtés de la roue (100) à démonter, les axes des rouleaux (24) étant parallèles à un axe de la roue (100), et un crochet (25) pour saisir au moins une portion de la roue (100).

9. Le système (1) de la revendication 6, où ledit châssis (20) est doté d'un système de positionnement équipé d'un dispositif de vissage/dévissage (29), le système de positionnement ayant pour but de placer le dispositif de vissage/dévissage (29) dans une position prédéfinie.
